# FASCICULE DE BREVET EUROPEEN

(11) **EP 1 958 871 B1**
(45) Date de publication et mention de la délivrance du brevet: **07.04.2010**
(21) Numéro de dépôt: 08101398.9
(22) Date de dépôt: 08.02.2008
(51) Int. Cl.: B64C 13/28, F16H 25/24

(54) **Détection de la reprise d'effort par une voie secondaire d'un actionneur de commande de vol**
Erfassung der Wiederherstellung des Drucks über eine Nebenleitung eines Stellglieds zur Flugsteuerung
Detection of load bearing by a secondary channel of a flight control actuator

(30) Priorité: 08.02.2007 FR 0753131
(43) Date de publication de la demande: 20.08.2008
(73) Titulaire: Goodrich Actuation Systems SAS, 78530 Buc (FR)
(72) Inventeur: Port-Robach, Isabelle, 95170, Deuil la Barre (FR); Raynal, Jean-Pierre, 95560, Baillet en France (FR); Moalic, Jean-Marc, 95210, Saint Gratien (FR)
(74) Mandataire: Callon de Lamarck, Jean-Robert

(56) Documents cités:
- EP-A- 1 340 958
- EP-A1- 1 557 588
- FR-A1- 2 839 352

## Description

La présente invention est relative à la reprise d'effort par une voie secondaire d'un actionneur de commande de vol d'aéronef.

Elle trouve notamment avantageusement application dans le cas d'actionneur de type THSA (« Trimmable Horizontal Stabilizer Actuator »). On sait que classiquement, de tels actionneurs comportent deux voies mécaniques, l'une primaire, l'autre secondaire, cette dernière étant destinée à reprendre l'effort lorsque la voie primaire est défaillante.

En fonctionnement sur la voie primaire, les efforts transitent par une vis à billes ou à rouleaux creuse. Cette caractéristique permet d'y loger une tige de sécurité (barre dite « fail safe »), rainurée à ses extrémités et reliée avec jeu à la vis. Cette structure assure la continuité de la transmission des efforts et de la rotation de l'ensemble (en évitant une séparation axiale des éléments de la vis, en cas de rupture de la vis elle-même). La vis se termine à un de ses extrémités par une pièce d'attache par laquelle elle est reliée à l'aéronef (attache haute primaire). En cas de défaillance de celle-ci, le passage des efforts transite par la tige de sécurité dont l'extrémité est une forme mâle (par exemple une sphère) disposée dans une forme femelle d'une pièce d'attache de la voie secondaire (attache haute secondaire).

En fonctionnement « normal », lorsque la voie primaire porte l'effort, il existe un jeu entre la forme mâle qui termine la tige de sécurité et la forme femelle de la pièce d'attache de la voie secondaire, de sorte qu'aucun contact ne doit se produire entre ladite forme mâle et ladite pièce d'attache ; lors de la reprise d'effort par la voie secondaire, la forme mâle qui termine la vis vient en contact avec la forme femelle de la pièce d'attache de la voie secondaire.

### PRESENTATION DE L'INVENTION

Un but de l'invention est de proposer une solution pour détecter la reprise d'effort, afin notamment d'informer le pilote de ce que la voie secondaire a pris le relais de la voie primaire.

Un autre but de l'invention est en particulier de résoudre cette problématique de détection d'une façon simple et efficace.

Un autre but encore de l'invention est de proposer une solution permettant d'éviter toute détection intempestive, et ce alors même que l'actionneur doit pouvoir être soumis à des environnements extérieurs sévères, notamment chimiques, climatiques ou électriques.

L'invention propose notamment d'utiliser le contact qui se forme entre la sphère qui termine la tige et la sphère femelle de la voie secondaire lorsque la voie secondaire est sous charge, pour détecter, par usure d'un élément de détection interposé, la reprise d'effort de la voie secondaire.

Notamment, le dispositif proposé est caractérisé en ce que au moins un élément de détection est disposé sur la forme mâle terminant la tige, sur la forme femelle ou entre l'une et l'autre de ces deux formes, cet élément de détection étant destiné à s'user sous l'effet du frottement entre la forme mâle et la forme femelle lorsque la voie secondaire est chargée et reprend l'effort, cet élément de détection étant relié ou apte à être relié à des moyens de traitement aptes à détecter l'usure de cet élément de détection.

Ainsi, grâce à cet élément de détection, il est possible de déclencher une alarme lorsque la voie secondaire est sous charge et qu'une usure apparaît.

Notamment, dans un mode de réalisation, la forme mâle qui termine la tige et la forme femelle de la pièce d'attache sont sphériques, un élément de détection étant un câble d'usure s'étendant sur une génératrice circulaire de l'une ou l'autre de ces deux formes.

Une telle structure a l'avantage d'être d'une bonne fiabilité, puisqu'elle permet une usure de l'élément de détection pratiquement à coup sur, indépendamment de la façon dont les deux formes mâle et femelle viennent en contact l'une contre l'autre lors de la reprise d'effort de la voie secondaire.

En variante, on peut envisager des éléments de détection par usure ponctuels, disposés de manière adéquate sur la forme mâle et/ou sur la forme femelle pour couvrir l'ensemble de la zone de contact entre ces deux formes et leurs différentes positions respectives.

La solution avec câble d'usure évite toutefois de fortement multiplier le nombre d'éléments de détection.

Par ailleurs, un tel dispositif est avantageusement complété par les différentes caractéristiques suivantes prises seules ou en combinaison :
- la forme mâle qui termine la tige et/ou la forme femelle de la pièce d'attache présente(nt) sur au moins une génératrice une rainure destinée à recevoir un câble d'usure ;
- la forme mâle qui termine la tige et/ou la forme femelle de la pièce d'attache présente(nt) au moins une rainure circulaire et perpendiculaire à l'axe de la vis et de l'arbre tubulaire ;
- la forme mâle qui termine la tige ou la forme femelle de la pièce d'attache présente deux rainures parallèles disposées sur deux de ces hémisphères ;
- l'élément de détection est un câble comportant un fil électriquement conducteur disposé dans un matériau électriquement isolant;
- les moyens de traitement comportent des moyens de détection d'incident par détection de coupure d'un circuit d'un élément de détection ou d'une mise à la masse de celui-ci.

L'invention concerne également un actionneur de commande de vol, et notamment un actionneur de type THSA, caractérisé en ce qu'il comporte un tel dispositif.

### PRESENTATION DES FIGURES

D'autres caractéristiques et avantages de l'invention ressortiront encore de la description qui suit, laquelle est purement illustrative et non limitative, et doit être lue en regard des dessins annexés sur lesquels :
- la figure 1 est une représentation schématique illustrant le principe d'un actionneur comportant un dispositif de détection de reprise d'effort conforme à un mode de réalisation possible de l'invention;
- la figure 2 est une représentation en coupe d'un détail de l'extrémité de l'actionneur sur laquelle est monté un dispositif de détection du type de celui représenté sur la figure 1 ;
- la figure 3 est une autre représentation schématique en coupe d'un détail de cette extrémité ;
- la figure 4 est une représentation en perspective de l'attache haute secondaire d'un actionneur comportant un dispositif de détection du type de ceux des figures 1 à 3 ;
- la figure 5 illustre un exemple de structure pour un câble d'usure d'un dispositif de détection conforme à un mode de réalisation possible de l'invention;
- la figure 6 illustre l'usure d'un élément de détection de type câble lors du chargement de la voie secondaire ;
- les figures 7 et 8 illustrent deux autres modes de réalisation possibles de l'invention.

### DESCRIPTION D'UN EXEMPLE DE REALISATION

### STRUCTURE GENERALE DE L'ACTIONNEUR

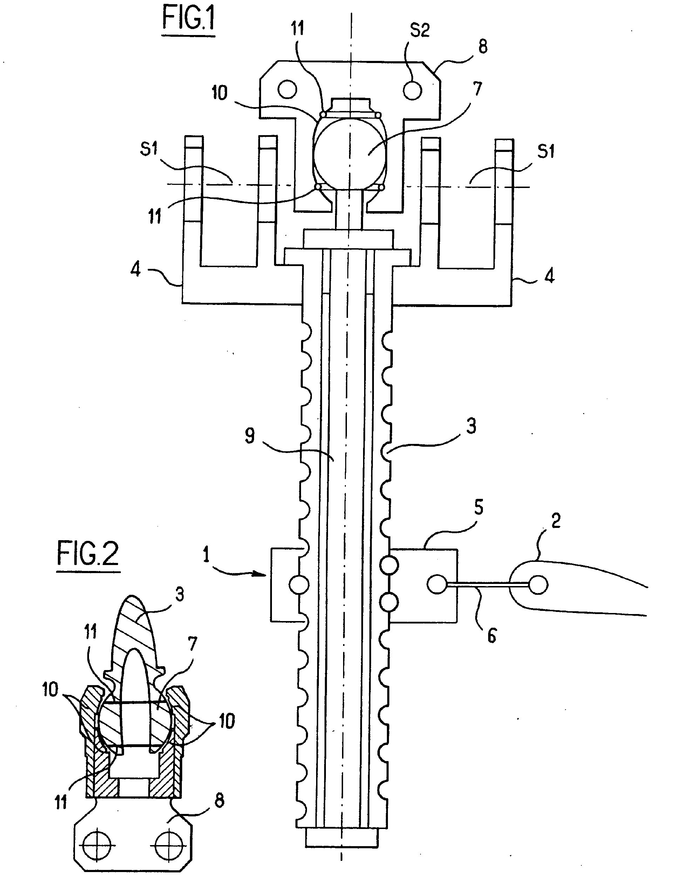

On a représenté schématiquement sur les figures 1 à 4 un actionneur 1 de commande de vol avec une voie primaire et une voie secondaire.

Cet actionneur 1 est par exemple un vérin de type THSA, pour la commande d'un plan 2 horizontal variable d'aéronef.

Il comporte une voie primaire qui comprend une vis 3 reliée à une extrémité, par un système à cardan 4, à la structure S1 de l'avion. La voie primaire comprend également un écrou 5, qui coopère avec la vis 3 en étant monté sur celle-ci et qui est relié au plan 2 à commander, par exemple par un autre système à cardan 6.

Une tige de sécurité 9 s'étend à l'intérieur de la vis creuse 3. Cette tige 9 se termine par une tête 7 sphérique placée avec jeu à l'intérieur d'une forme sphérique femelle 10 d'une tête d'attache 8 de la voie secondaire, cette tête d'attache 8 étant elle-même fixée à une structure S2 de l'avion.

Cet actionneur est par exemple commandé par un moteur hydraulique ou électrique M, qui entraine la vis 3 en rotation et déplace l'écrou 5 en translation, ce dernier étant à cet effet bloqué en rotation. Le déplacement en translation de l'écrou 5 permet ainsi de commander le basculement que l'on souhaite donner au plan horizontal variable 2.

### DETECTION DE LA MISE SOUS CHARGE

Des moyens permettant de fournir une information de la détection de la mise sous charge de la voie secondaire vont maintenant être décrits.

Ces moyens comportent par exemple un ou plusieurs câbles d'usure 11 chacun réparti sur une génératrice circulaire de la forme sphérique femelle 10 (figure 1).

Une ou plusieurs rainures 13 peuvent être prévues à cet effet sur la surface intérieure de la forme sphérique femelle 10 de la tête d'attache 8, une telle rainure 13 présentant une profondeur très inférieure au demi-diamètre du câble 11 qu'elle reçoit, ce dernier s'étendant en surépaisseur sur la surface intérieure de la forme sphérique femelle 10.

En variante, la ou les câbles d'usure 11 pourraient être portés par la sphère male 7.

Egalement, dans des variantes non représentées, les pièces 7 et 8 pourraient avoir d'autres formes que des formes sphériques ; elles pourraient notamment avoir des formes de révolution, par exemple des formes ovales.

Lors d'une défaillance de la voie primaire, la tête sphérique 7 (en rotation) et la sphère femelle 10 (fixe) viennent en contact, ce qui crée très rapidement usure du ou des câbles 11.

Dans l'exemple illustré sur les figures, il est prévu deux câbles 11 de ce type disposés sur deux génératrices parallèles et perpendiculaires à l'arbre de secours 9 et à la vis 3, ces deux génératrices étant disposées sur deux hémisphères différents de la tête 7 ou de la forme sphérique intérieure 10, de façon à permettre une détection que la voie secondaire soit sollicitée en traction ou en compression.

Selon la géométrie des formes de révolution mâle et femelle, on pourra prévoir un nombre de câbles d'usure plus important pour couvrir toutes les positions de contact : certaines géométries peuvent par exemple nécessiter un câble intermédiaire, pour prendre en compte le tangage entre les deux formes.

Un tel câble d'usure 11 est par exemple un câble comportant un ou plusieurs éléments filaires conducteurs, reliés à un montage électrique 12 permettant de détecter leur rupture et de fournir cette information au calculateur par exemple (détection de la coupure d'un circuit ou d'une mise à la masse). Le pilote est alors informé d'un incident sur le THSA.

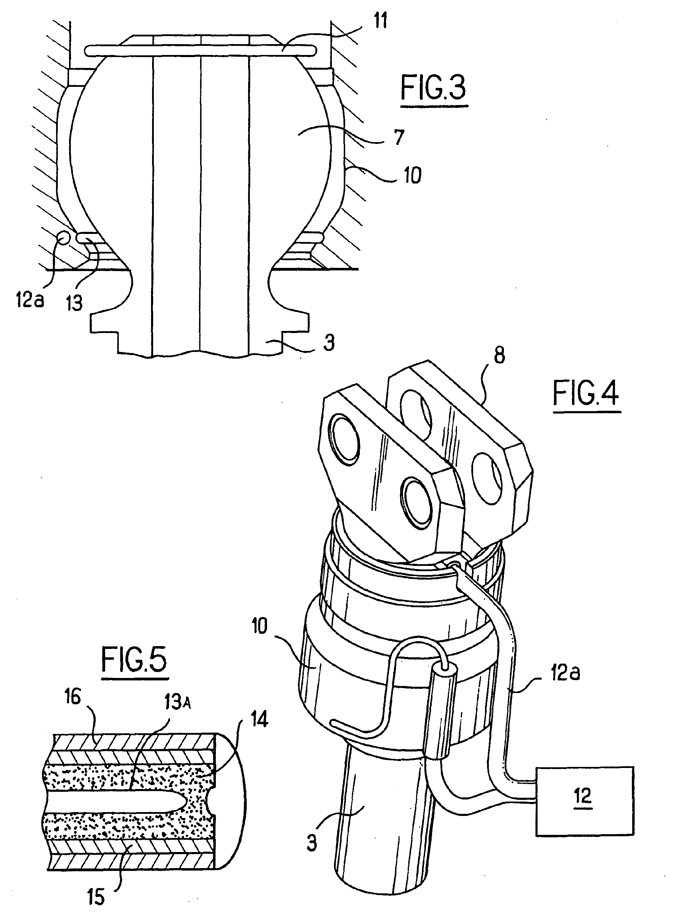

Sur la figure 4, les câbles 12a illustrent la liaison électrique entre ce montage 12 et des câbles d'usure 11.

Le montage 12 peut par exemple être un circuit déjà existant sur des commandes de vol équipant d'ores et déjà un aéronef, le câble d'usure 11 et les câbles de raccordement étant montés en série sur ce circuit 12.

La structure d'un tel câble 11 est par exemple du type de celle illustrée sur la figure 5, et comporte un fil électriquement conducteur 13 disposé dans un matériau 14 électriquement isolant, l'ensemble étant disposé dans une enveloppe de protection mécanique et de protection aux rayonnements électromagnétiques 15.

Le fil 13 et l'enveloppe 15 sont par exemple en Nickel, le matériau isolant 14 pouvant être de la Magnésie.

Une telle structure présente une très bonne tenue en température, ainsi qu'une très bonne tenue aux ondes électromagnétiques.

Elle a donc l'avantage de présenter une très bonne robustesse aux différents environnements susceptibles d'être rencontrés en aéronautique.

Le ou les câbles sont maintenus dans les rainures 13 par collage ou brasure.

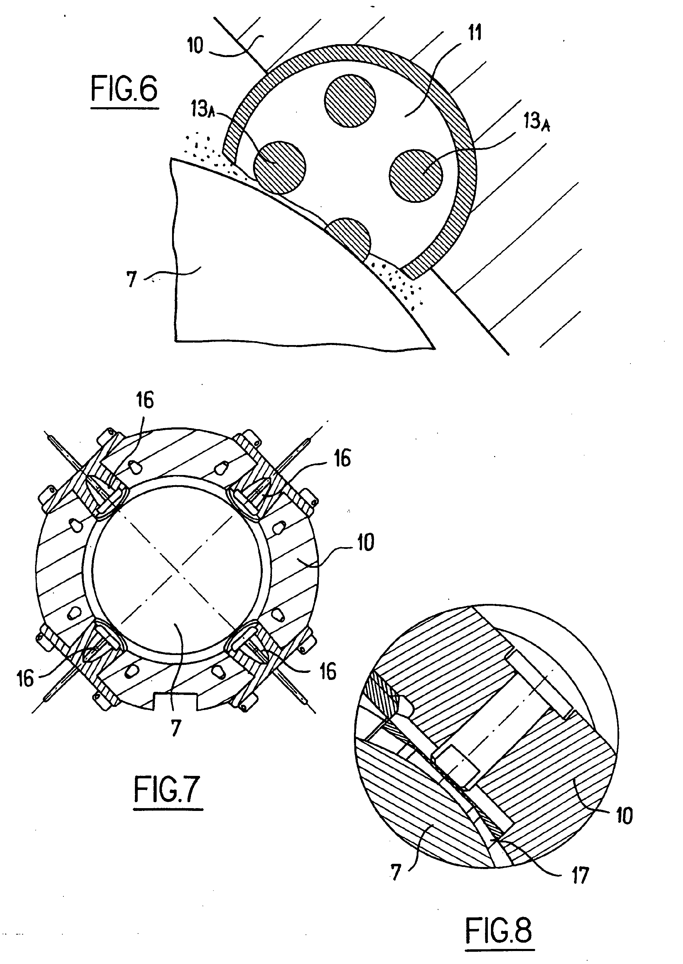

Ainsi que l'illustre la figure 6, lors d'une reprise d'effort de la voie secondaire, le câble 11 - coincé en contact entre les formes mâle et femelle 7 et 10 - s'use progressivement, de sorte que son fil conducteur 13 (ou l'un de ses fils conducteurs) s'use puis se coupe.

D'autres variantes d'éléments de détection par usure sont envisageables, par exemple des éléments de détection par usure ponctuels, répartis disposés de manière adéquate sur la forme mâle et/ou sur la forme femelle pour couvrir l'ensemble de la zone de contact entre ces deux formes et leurs différentes positions respectives.

La figure 7 illustre notamment une solution avec plusieurs éléments de détection ponctuels 16 constitués chacun par une pastille enrobant un fil électrique, montée en saillie intérieure sur la forme femelle. Ces différents éléments sont répartis pour couvrir sensiblement toutes les positions relatives de contact entre la forme mâle et la forme femelle.

En variante encore, dans le cas d'une solution avec un câble, celui-ci peut être, ainsi qu'illustré sur la figure 8, un ruban 17 comportant un fil enrobé s'étendant en saillie sur une génératrice circulaire intérieure de la forme femelle.

## Revendications

1. Dispositif pour la détection de la reprise d'effort par une voie secondaire d'un actionneur (1) de commande de vol présentant une voie primaire (3,4,5) et une voie secondaire (7,8,9,10) apte à reprendre l'effort de la voie primaire en cas de défaillance de celle-ci, la voie primaire comportant une vis (3), la vis se terminant par une pièce d'attache de la voie primaire, la voie secondaire comportant une tige de sécurité (9) de reprise d'effort traversant la vis (3), cette tige (9) se terminant par une forme mâle (7) reçue - avec jeu lorsque la voie primaire porte l'effort, - dans une forme femelle (10) d'une pièce d'attache (8) de la voie secondaire, la forme mâle (7) qui termine la tige (9) et la forme femelle (10) de la pièce d'attache (8) étant sphériques ou de révolution,
**caractérisé en ce qu'**au moins un élément de détection (11) est disposé sur la forme mâle (7) terminant la tige, sur la forme femelle (10) ou entre l'une et l'autre de ces deux formes, cet élément de détection (11) étant destiné à s'user sous l'effet du frottement entre la forme mâle (7) et la forme femelle (10) lorsque la voie secondaire est chargée et reprend l'effort, cet élément de détection (11) étant relié ou apte à être relié à des moyens de traitement aptes à détecter l'usure de cet élément de détection (11).

2. Dispositif selon la revendication 1, **caractérisé en ce qu'**un élément de détection (11) est un câble d'usure (11) s'étendant sur une génératrice circulaire de l'une ou l'autre de ces deux formes.

3. Dispositif selon la revendication 2, **caractérisé en ce que** la forme mâle (7) qui termine la tige (9) et/ou la forme femelle (10) de la pièce d'attache (8) présente(nt) sur au moins une génératrice une rainure (13) destinée à recevoir un câble d'usure (11).

4. Dispositif selon l'une des revendications 2 ou 3, **caractérisé en ce que** la forme mâle (7) qui termine la tige (9) et/ou la forme femelle (10) de la pièce d'attache (8) présente(nt) au moins une rainure (13) circulaire et perpendiculaire à l'axe de la vis (3) et de l'arbre tubulaire.

5. Dispositif selon la revendication 4, **caractérisé en ce que** la forme mâle (7) qui termine la tige (9) ou la forme femelle (10) de la pièce d'attache (8) présente au moins deux rainures (13) parallèles disposées respectivement sur l'un et l'autre des deux hémisphères.

6. Dispositif selon la revendication 1, **caractérisé en ce que** l'élément de détection (11) est un câble (11) comportant un ou plusieurs fils (13A) électriquement conducteur(s) disposé(s) dans un matériau (14) électriquement isolant et dans une enveloppe mécanique (15) assurant la protection électromagnétique.

7. Dispositif selon l'une des revendications précédentes, **caractérisé en ce que** les moyens de traitement comportent des moyens (12) de détection d'incident par détection de coupure d'un circuit d'un élément de détection ou d'une mise à la masse de celui-ci.

8. Dispositif selon la revendication 2, **caractérisé en ce que** le câble (11) est un ruban comportant un fil enrobé s'étendant en saillie sur une génératrice circulaire intérieure de la forme femelle (10).

9. Dispositif selon la revendication 1, **caractérisé en ce qu'**un élément de détection par usure est un élément ponctuel.

10. Actionneur (1) de commande de vol, notamment de type THSA, **caractérisé en ce qu'**il comporte un dispositif selon l'une des revendications précédentes.

## Claims

1. Device for sensing load relief by a secondary path of a flight control actuator (1) having a primary path (3, 4, 5) and a secondary path (7, 8, 9, 10) capable of relieving the load of the primary path in the event of a breakdown thereof, the primary path comprising a screw (3), the screw terminating in a fastener of the primary path, the secondary path comprising an emergency load relief rod (9) passing through the screw (3), this rod (9) terminating in a male shape (7) which, when the primary path is carrying the load, is accommodated inside of a female shape (10) of a fastener (8) of the secondary path, the male shape (7), which terminates the rod (9), and the female shape (10) of the fastener (8) being spherical or rotational,
**characterized in that** at least one sensing element (11) is disposed on the male shape (7) terminating the rod, on the female shape (10) or between both of these two shapes, this sensing element (11) being designed to wear down due to the friction between the male shape (7) and the female shape (10), when the secondary path is loaded and is relieving the load, this sensing element (11) being connected or capable of being connected to processing means capable of sensing wear on this sensing element (11).

2. Device of claim 1, **characterized in that** a sensing element (11) is a fairlead (11) extending along a circular generating of either of these two shapes.

3. Device of claim 2, **characterized in that** the male shape (7), which terminates the rod (9), and/or the female shape (10) of the fastener (8) has (have) a groove (13) along at least one generating line, which is intended for receiving a fairlead (11).

4. Device as claimed in one of claims 2 or 3, **characterized in that** the male shape (7), which terminates the rod (9), and/or the female shape (10) of the fastener (8) have at least one circular groove (13) perpendicular to the axis of the screw (3) and hollow shaft.

5. Device of claim 4, **characterized in that** the male shape (7), which terminates the rod (9), or the female shape (10) of the fastener (8) have at least two parallel grooves (13) disposed on both of the two hemispheres, respectively.

6. Device of claim 1, **characterized in that** the sensing element (11) is a cable (11) comprising one or more electrically conductive wires (13A) disposed inside an electrically insulating material (14) and in mechanical case (15) ensuring electromagnetic protection.

7. Device as claimed in one of the preceding claims, **characterized in that** the processing means comprise means (12) for sensing an incident by sensing that the circuit of a sensing element or grounding thereof has been disconnected.

8. Device of claim 2, **characterized in that** the cable (11) is a strip comprising a coated wire protruding along an inside circular generating line of the female shape (10).

9. Device of claim 1, **characterized in that** wear-sensing element is a point-based element.

10. Flight control actuator (1), of the THSA type in particular, **characterized in that** it comprises a device as claimed in one of the preceding claims.

## Patentansprüche

1. Vorrichtung zur Erfassung der Wiederherstellung des Drucks über eine Nebenleitung eines Stellglieds (1) zur Flugsteuerung, das eine Hauptleitung (3, 4, 5) und eine Nebenleitung (7, 8, 9, 10) aufweist, die geeignet ist, den Druck der Hauptleitung im Falle ihres Ausfalls wiederherzustellen, wobei die Hauptleitung eine Schraube (3) umfasst, wobei die Schraube mit einem Verbindungsstück der Hauptleitung abschließt, wobei die Nebenleitung einen Sicherheitsstift (9) zur Druckwiederherstellung umfasst, der die Schraube (3) durchquert, wobei der Stift (9) mit einer männlichen Form abschließt (7), die - mit Spiel, wenn die Hauptleitung den Druck trägt - in eine weibliche Form (10) eines Verbindungsstücks (8) der Nebenleitung aufgenommen ist, wobei die männliche Form (7), die den Stift (9) abschließt, und die weibliche Form (10) des Verbindungsstücks (8) kugelförmig oder rotationsförmig sind,
**dadurch gekennzeichnet, dass** wenigstens ein Erfassungselement (11) auf der männlichen Form (7), die den Stift abschließt, auf der weiblichen Form (10) oder zwischen der einen und der anderen dieser beiden Formen angeordnet ist, wobei dieses Erfassungselement (11) bestimmt ist, sich unter der Wirkung der Reibung zwischen der männlichen Form (7) und der weiblichen Form (10) abzunutzen, wenn die Nebenleitung belastet ist und den Druck wiederherstellt, wobei dieses Erfassungselement (11) verbunden ist mit oder geeignet ist, mit Verarbeitungsmitteln verbunden zu werden, die geeignet sind, die Abnutzung dieses Erfassungselements (11) zu erfassen.

2. Vorrichtung gemäß Anspruch 1, **dadurch gekennzeichnet, dass** ein Erfassungselement (11) ein Abnutzungskabel (11) ist, das sich auf einer kreisförmigen Mantellinie der einen oder der anderen dieser beiden Formen erstreckt.

3. Vorrichtung gemäß Anspruch 2, **dadurch gekennzeichnet, dass** die männliche Form (7), die den Stift (9) abschließt, und/oder die weibliche Form (10) des Verbindungsstücks (8) auf wenigstens einer Mantellinie eine Rille (13) aufweist, die dazu bestimmt ist, ein Abnutzungskabel (11) aufzunehmen.

4. Vorrichtung gemäß einem der Ansprüche 2 oder 3, **dadurch gekennzeichnet, dass** die männliche Form (7), die den Stift (9) abschließt, und/oder die weibliche Form (10) des Verbindungsstücks (8) wenigstens eine kreisförmige und senkrecht zur Achse der Schraube (3) und der rohrförmigen Welle stehende Rille (13) aufweist/-en.

5. Vorrichtung gemäß Anspruch 4, **dadurch gekennzeichnet, dass** die männliche Form (7), die den Stift (9) abschließt, oder die weibliche Form (10) des Verbindungsstücks (8) wenigstens zwei parallele Rillen (13) aufweist, die jeweils auf der einen und der anderen der beiden Halbkugeln angeordnet sind.

6. Vorrichtung gemäß Anspruch 1, **dadurch gekennzeichnet, dass** das Erfassungselement (11) ein Kabel (11) ist, das ein oder mehrere elektrisch leitende Drähte (13A) umfasst, der/die in einem elektrisch isolierenden Material (14) und in einer mechanischen Hülle (15) angeordnet ist/sind, die den elektromagnetischen Schutz sicherstellt.

7. Vorrichtung gemäß einem der vorhergehenden Ansprüche, **dadurch gekennzeichnet, dass** die Verarbeitungsmittel Mittel (12) zur Erfassung eines Störfalls durch Erfassung der Unterbrechung einer Schaltung eines Erfassungselements oder seiner Erdung umfassen.

8. Vorrichtung gemäß Anspruch 2, **dadurch gekennzeichnet, dass** das Kabel (11) ein Band ist, das einen ummantelten Draht umfasst, der sich vorstehend auf einer inneren kreisförmigen Mantellinie der weiblichen Form (10) erstreckt.

9. Vorrichtung gemäß Anspruch 1, **dadurch gekennzeichnet, dass** ein auf Abnutzung basiertes Erfassungselement ein punktförmiges Element ist.

10. Stellglied (1) zur Flugsteuerung, insbesondere vom Typ THSA, **dadurch gekennzeichnet, dass** es eine Vorrichtung gemäß einem der vorhergehenden Ansprüche umfasst.
